# EUROPÄISCHE PATENTSCHRIFT

(11) **EP 2 154 020 B1**
(45) Veröffentlichungstag und Bekanntmachung des Hinweises auf die Patenterteilung: **25.01.2012**
(21) Anmeldenummer: 09010419.1
(22) Anmeldetag: 13.08.2009
(51) Int. Cl.: B60N 2/48

(54) **Kopfstütze, insbesondere für Fahrzeugsitz**
Head rest, in particular for vehicle seat
Appuie-tête, en particulier pour siège de véhicule

(30) Priorität: 12.12.2008 DE 102008061738; 13.08.2008 DE 102008038909
(43) Veröffentlichungstag der Anmeldung: 17.02.2010
(73) Patentinhaber: Johnson Controls GmbH, 51399 Burscheid (DE)
(72) Erfinder: Niehues, Andreas, 40764 Langenfeld (DE)
(74) Vertreter: Wolff, Felix

(56) Entgegenhaltungen:
- DE-A1- 4 218 967
- DE-A1- 10 135 239

## Beschreibung

Die Erfindung betrifft eine Kopfstütze, insbesondere für einen Fahrzeugsitz, welche mit einer zentralen Ausnehmung und einem Bezug versehen ist.

Derartige Kopfstützen sind aus dem Stand der Technik, beispielsweise der DE-A-3002 235, der DE 354 458 6, der DE 101 35 239 sowie der EP 0 322 374 bekannt. Teilweise weisen diese Kopfstützen gemäß dem Stand der Technik eine sich durch den gesamten Querschnitt erstreckende Ausnehmung auf, wodurch sich Gewichtsersparnisse erzielen lassen und die Sicht in den rückwärtigen Bereich verbessert wird. Diese Kopfstützen sind jedoch vergleichsweise aufwändig zu fertigen.

Der Erfindung liegt die Aufgabe zugrunde, die Variabilität der Kopfstütze, insbesondere hinsichtlich der Gestalt der Ausnehmung, zu erhöhen. Die Änderung der Gestalt der Ausnehmung soll dabei beispielsweise durch unterschiedliche Einsätze im Kopfstützenwerkzeug erzielbar sein.

Gelöst wird die Aufgabe mit einer Kopfstütze, die an der Rückenlehne eines Kraftfahrzeugsitzes mittels mindestens einer Haltestange vorgesehen ist, wobei ein Grundkörper an der Haltestange angeordnet ist und sie eine sich durch den gesamten Querschnitt erstreckende Ausnehmung aufweist und die Ausnehmung mit einer ersten und einer zweiten Blende zumindest teilweise ausgekleidet ist.

Die vorliegende Erfindung betrifft eine Kopfstütze an der Rückenlehne eines Kraftfahrzeugsitzes. Dieser Kraftfahrzeugsitz kann einer oder mehreren Personen Platz bieten. Es kann sich demnach bei dem Kraftfahrzeugsitz auch um eine Sitzbank handeln. An der Rücklehne dieses Kraftfahrzeugsftzes ist mit einer Haltestange eine Kopfstütze vorgesehen, die einen Grundkörper, vorzugsweise einen Grundkörper aus Kunststoff aufweist, der an der Haltestange angeordnet ist. Die Kopfstütze und damit auch der Grundkörper weist erfindungsgemäß eine Ausnehmung auf, die sich durch deren gesamten Querschnitt erstreckt, so dass man durch die Kopfstütze hindurchsehen kann.

Erfindungsgemäß ist diese Ausnehmung mit einer ersten und einer zweiten Blende zumindest teilweise vorzugsweise vollständig ausgekleidet. Durch dieses Merkmal ist es möglich, Kopfstützen zur Verfügung zu stellen, bei denen die Ausnehmung bezüglich Größe und/oder Form variieren kann. Dafür müssen in den Grundkörper nur unterschiedliche Platzhalter für die Ausnehmung vorgesehen werden.

Die Blenden sind vorzugsweise ebenfalls aus Kunststoff gefertigt.

Vorzugsweise ist eine der beiden Blenden, insbesondere rastend, mit dem Grundkörper verbunden.

Gemäß einer weiteren bevorzugten Ausführungsform ist eine der beiden Blenden, insbesondere rastend, mit der anderen Blende verbunden.

Vorzugsweise werden die beiden Blenden nicht auf Stoß angeordnet, sondern werden teilweise ineinander geschoben, bevor sie eine beispielsweise rastende Verbindung eingehen. Diese bevorzugte Ausführungsform der vorliegenden Erfindung hat den Vorteil, dass Fertigungstoleranzen leicht ausgleichbar sind und sich die Blenden für mehrere Ausnehmungsformen eignen.

Die erfindungsgemäße Kopfstütze weist in der Regel eine Polsterung, vorzugsweise an allen Seiten, auf, die wiederum von einem Bezug überzogen ist. Vorzugsweise ist der Bezug zumindest teilweise in der Ausnehmung befestigt.

Gemäß einer weiteren oder einer noch mehr bevorzugten Ausführungsform der vorliegenden Erfindung ist der Bezug zumindest teilweise an einer der beiden Blenden angeordnet. Dies kann beispielsweise durch einen Form-, Kraft- und/oder Stoffschluss erfolgen.

Eine noch weitere bevorzugte Ausführungsform sieht vor, dass der Bezug an dem Grundkörper angeordnet ist.

Vorzugsweise umschließt der Grundkörper die Haltestangen zumindest teilweise. Insbesondere werden die Haltestangen beim Gießen, Spritzen oder Spritzgießen des Grundkörpers vorzugsweise zumindest teilweise von dem Werkstoff des Grundkörpers umschlossen.

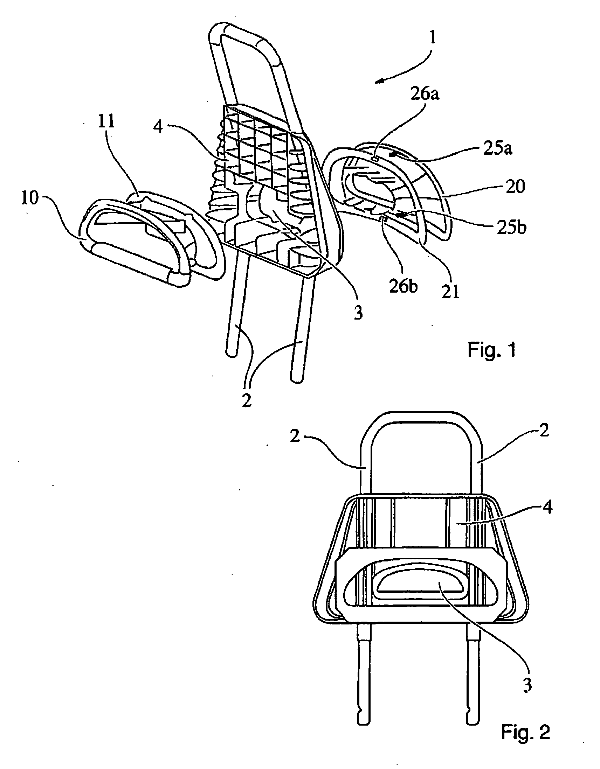

Im Folgenden wird die Erfindung anhand der Figuren 1 bis 5 erläutert. Diese Erläuterungen sind lediglich beispielhaft und schränken den allgemeinen Erfindungsgedanken nicht ein.
- **Figur 1**: zeigt eine Explosionsdarstellung der Kopfstütze ohne Bezugsstoffe.
- **Figur 2**: zeigt den Zusammenbau der Kopfstütze nach Fig. 1 in der Vorderansicht .
- **Figur 3**: stellt einen horizontalen Schnitt C-C aus Figur 2 dar.
- **Figur 4**: stellt einen vertikalen Schnitt B-B aus Figur 2 dar.
- **Figur 5**: stellt einen vertikalen Schnitt A-A aus Figur 2 dar.

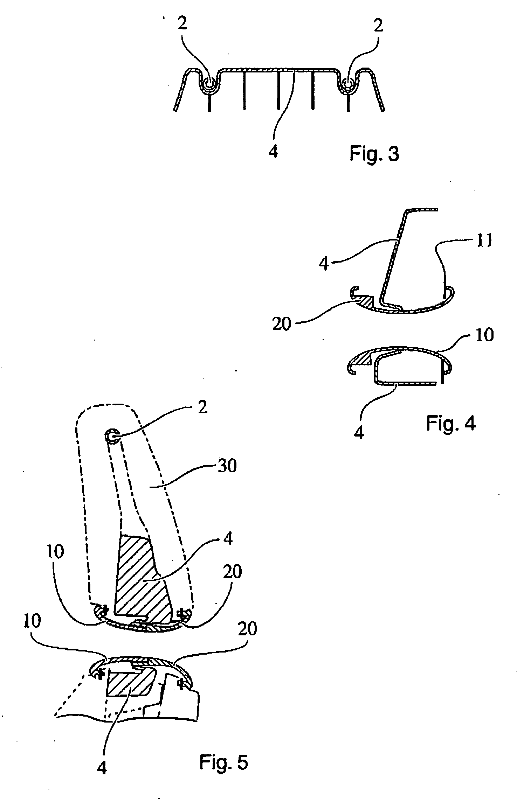

Die Kopfstütze 1 ist über übliche, im Ausführungsbeispiel bügelartige Haltestangen 2 in der nicht dargestellten Rückenlehne eines Fahrzeugsitzes verankert, wobei der Grundkörper 4 in einem Spritzgießwerkzeug an die Haltestangen 2 angeformt wird, was in Figur 3 dargestellt ist. Der Grundkörper 4 weist eine zentrale Ausnehmung 3 auf, welche einen Durchblick in bzw. gegen die Sitzrichtung, beispielsweise die Fahrtrichtung ermöglicht. Durch unterschiedliche Einsätze im Spritzgießwerkzeug kann die Kontur der Ausnehmung 3 variiert werden. Nachdem der Grundkörper 4 mit der Rückenlehne vereinigt ist, wird der Verbund beispielsweise mit einem stoß- und druckabsorbierendem Dämpfungsmaterial, vorzugsweise einer vorkonfektionierten Schaumstruktur 30, ummantelt, was in Figur 5 dargestellt ist.

Durch die Ausnehmung 3 entsteht an dessen Rand eine flanschförmige Auskragung, an der der nicht dargestellte Bezugsstoff mit einem Befestigungsmittel befestigt werden kann. In einer bevorzugten Ausführung werden dazu z. B. J-förmige Fixierhaken, sogenannte Retainer, verwendet, die an dem Saum des Bezugsstoffs z.B. durch Annähen befestigt sind. Der Bezugsstoff hat zu der entsprechenden Ausnehmung 3 des Grundkörpers 4 komplementäre Öffnungen sowohl an seinem vorderen Teil als auch am hinteren Teil, an deren Umrandungen jeweils plattenförmige Rahmen 11 und 21 flanschartig befestigt sind, vorzugsweise durch Annähen. Der hintere Rahmen 21 wird über die hintere Designblende 20 gesteckt, wobei die relative Lage zueinander durch Eingreifen von mindestens zwei stiftartigen Zapfen 25a und 25b an der Designblende 20 in entsprechende Aussparungen 26a und 26b an dem plattenförmigen Rahmen 21 erfolgt, Diese vormontierte Einheit wird von hinten in die Ausnehmung 3 des Grundkörpers 4 eingeschoben bis ein integriertes Befestigungsmittel wie z.B. Rasthaken an der Umrandung der flanschförmigen Auskragung einrasten.

Die vordere Designblende 10 wird mit dem am vorderen Teil des Bezugsstoffs befestigten plattenförmigen Rahmen 11 verbunden, wobei die relative Lage zueinander durch Eingreifen von mindestens zwei stiftartigen Zapfen an der Designblende 10 in entsprechende Aussparungen an dem plattenförmigen Rahmen 11 erfolgt. Die vormontierte Einheit wird von vorne in die Ausnehmung 3 des Grundkörpers 4 eingeschoben und durch einen Eingriff von integrierten Befestigungsmittel wie z.B. Rasthaken an einer der beiden Designblenden in integrierte laschenförmige Ausnehmungen der anderen Designblende verbunden. Zum Toleranzausgleich des entstehenden Spalts ist vorgesehen, die Stoßstelle nicht an den Stirnseiten der Kontaktflächen der beiden Designblenden anzuordnen, sondern eine Überlappung durch Ineinandergreifen der Kontaktflächen herbeizuführen.

### Bezugszeichenliste

- 1: Kopfstütze
- 2: Haltestangen
- 3: Ausnehmung
- 4: Grundkörper
- 10: vordere Blende, Designblende
- 11: vorderer Rahmen
- 20: hintere Blende, Designblende
- 21: hinterer Rahmen
- 25a, 25b: Zapfen
- 25a, 25b: Aussparung
- 30: Schaumstruktur

## Patentansprüche

1. Kopfstütze (1), die an in der Rückenlehne eines Kraftfahrzeugsitzes mittels mindestens einer Haltestange (2) vorgesehen ist, wobei ein Grundkörper (4) an der Haltestange (2) angeordnet ist und sie eine sich durch den gesamten Querschnitt erstreckende Ausnehmung (3) aufweist, **dadurch gekennzeichnet, dass** die Ausnehmung (3) mit einer ersten und einer zweiten Blende (10, 20) zumindest teilweise ausgekleidet ist.

2. Kopfstütze nach Anspruch 1, **dadurch gekennzeichnet, dass** die eine Blende (10, 20) vorzugsweise rastend, mit dem Grundkörper verbunden ist.

3. Kopfstütze nach einem der voranstehenden Ansprüche, **dadurch gekennzeichnet, dass** eine Blende (10, 20) mit der anderen Blende (10, 20), vorzugsweise rastend verbunden ist.

4. Kopfstütze nach Anspruch 3, **dadurch gekennzeichnet, dass** eine Blende (10, 20) in die andere Blende (10, 20) eingeschoben ist.

5. Kopfstütze nach einem der voranstehenden Ansprüche, **dadurch gekennzeichnet, dass** sie mit einem Bezug überzogen ist.

6. Kopfstütze nach Anspruch 5, **dadurch gekennzeichnet, dass** der Bezug im Bereich der Ausnehmung (3) befestigt ist.

7. Kopfstütze nach einem der Ansprüche 5 oder 6, **dadurch gekennzeichnet, dass** der Bezug an einer der Blenden (10, 20) angeordnet ist.

8. Kopfstütze nach einem der Ansprüche 5 - 7, **dadurch gekennzeichnet, dass** der Bezug an dem Grundkörper (4) angeordnet ist.

9. Kopfstütze nach einem der voranstehenden Ansprüche, **dadurch gekennzeichnet, dass** der Grundkörper (4) die Haltestange (2) zumindest teilweise umschließt.

## Claims

1. Headrest (1) which is provided on the backrest of a motor vehicle seat by means of at least one holding rod (2), wherein a basic body (4) is arranged on the holding rod (2) and the latter has a recess (3) extending through the entire cross section, **characterized in that** the recess (3) is at least partially lined with a first and second faceplate (10, 20).

2. Headrest according to Claim 1, **characterized in that** the one faceplate (10, 20) is connected to the basic body preferably in a latching manner.

3. Headrest according to one of the preceding claims, **characterized in that** one faceplate (10, 20) is connected to the other faceplate (10, 20) preferably in a latching manner.

4. Headrest according to Claim 3, **characterized in that** one faceplate (10, 20) is pushed into the other faceplate (10, 20).

5. Headrest according to one of the preceding claims, **characterized in that** it is covered with a cover.

6. Headrest according to Claim 5, **characterized in that** the cover is fastened in the region of the recess (3).

7. Headrest according to either of Claims 5 and 6, **characterized in that** the cover is arranged on one of the faceplates (10, 20).

8. Headrest according to one of Claims 5-7, **characterized in that** the cover is arranged on the basic body (4).

9. Headrest according to one of the preceding claims, **characterized in that** the basic body (4) at least partially surrounds the holding rod (2).

## Revendications

1. Appuie-tête (1), qui est prévu sur un dossier d'un siège de véhicule automobile au moyen d'au moins une tige de retenue (2), un corps de base (4) étant disposé sur la tige de retenue (2) et l'appuie-tête présentant un évidement (3) s'étendant à travers toute sa section transversale, **caractérisé en ce que** l'évidement (3) est revêtu au moins en partie avec un premier et un deuxième bandeau (10, 20).

2. Appuie-tête selon la revendication 1, **caractérisé en ce que** ledit bandeau (10, 20) est connecté au corps de base de préférence par encliquetage.

3. Appuie-tête selon l'une quelconque des revendications précédentes, **caractérisé en ce qu'**un bandeau (10, 20) est connecté à l'autre bandeau (10, 20) de préférence par encliquetage.

4. Appuie-tête selon la revendication 3, **caractérisé en ce qu'**un bandeau (10, 20) est enfoncé dans l'autre bandeau (10, 20).

5. Appuie-tête selon l'une quelconque des revendications précédentes, **caractérisé en ce qu'**il est recouvert d'un revêtement.

6. Appuie-tête selon la revendication 5, **caractérisé en ce que** le revêtement est fixé dans la région de l'évidement (3).

7. Appuie-tête selon l'une quelconque des revendications 5 ou 6, **caractérisé en ce que** le revêtement est disposé sur l'un des bandeaux (10, 20).

8. Appuie-tête selon l'une quelconque des revendications 5 à 7, **caractérisé en ce que** le revêtement est disposé sur le corps de base (4).

9. Appuie-tête selon l'une quelconque des revendications précédentes, **caractérisé en ce que** le corps de base (4) entoure au moins en partie la tige de retenue (2).
